# EUROPEAN PATENT APPLICATION

(11) **EP 2 042 395 A2**
(43) Date of publication of application: **01.04.2009**
(21) Application number: 08164991.5
(22) Date of filing: 24.09.2008
(51) Int. Cl.: B60S 9/10

(54) **Support device to support a means of transport**

(30) Priority: 25.09.2007 IT UD20070174
(71) Applicant: Fermi Srl, 31100 Treviso (IT)
(72) Inventor: Fermi, Steno, 31048, San Biagio di Callalta (TV) (IT)
(74) Representative: Petraz, Gilberto Luigi

(57) **Abstract**

A support device, to support statically a means of transport, comprises: a first support element (13) able to be made solid with the means of transport; a second support element (14), rotatably pivoted on the first support element (13), to be able to rotate between an extended position, in which the first and second support elements (13, 14) are able to support statically the means of transport, and a folded position which allows the means of transport to move, and vice versa; a first clamping element (19), disposed in the first support element (13) and able to cooperate with a second clamping element (16, 18) of the second support element (14) in order to selectively clamp the second support element (14) at least in the extended position. The first clamping element (19) is able to couple through rectilinear sliding with the second clamping element (16, 18), so as to prevent, when clamping is activated, the rotation of the second support element (14) with respect to the first support element (13).

## Description

### FIELD OF THE INVENTION

The present invention concerns a support device able to support, in a static position, a means of transport such as for example a trailer, a semitrailer, a trolley, a caravan or suchlike. The support device according to the invention comprises two support elements, one fixed and one foldable with respect to the other, and is provided with clamping elements to clamp the foldable support element in a first extended position in which, together with the first fixed support element, it supports the means of transport, or in a second folded position and raised with respect to the road surface.

### BACKGROUND OF THE INVENTION

A device is known, to support road semitrailers in a static position, such as for example large size commercial semitrailers, when the latter are detached from their tractor part. The support device comprises an upper support element, attached to the frame of the semitrailer, and a lower support element, articulated and rotatably foldable under the loading platform of the means of transport. The support device also comprises a clamping element, pivoted on the upper support element and able to rotate selectively so as to clamp the lower support element in the extended position or the folded position.

One purpose of the present invention is to achieve a support device to support a means of transport with a mechanical embodiment that is simple and does not entail high production and maintenance costs.

Another purpose of the present invention is to achieve a support device which has good stability and good mechanical safety.

The Applicant has devised, tested and embodied the present invention to overcome the shortcomings of the state of the art and to obtain these and other purposes and advantages.

### SUMMARY OF THE INVENTION

The present invention is set forth and characterized in the independent claim, while the dependent claims describe other characteristics of the invention or variants to the main inventive idea.

In accordance with the above purposes, a support device to support statically a means of transport comprises a first support element able to be made solid with said means of transport, and a second support element rotatably pivoted on said first support element, so as to be able to rotate between an extended position, in which the first and the second support elements are able to statically support the means of transport, and a folded position, not interfering with the road surface when the means of transport is in motion, or advantageously substantially horizontal, towards the inside of the means of transport. The device also comprises a first clamping element, associated with the first support element and able to cooperate with a second clamping element of the second support element so as to selectively clamp the second support element at least in the extended position and advantageously also in the folded position.

According to a characteristic of the present invention, the first clamping element is able to couple due to rectilinear sliding with the second clamping element so as to prevent the rotation of the second support element with respect to the first support element once reciprocal clamping has been actuated.

Advantageously, the first clamping element comprises a pin and the second clamping element comprises a first hole.

The pin is able to be inserted in the first hole to prevent the second support element from rotating between said folded position and said extended position.

According to a variant of the present invention, the second clamping element comprises a second hole.

The pin is able to be inserted in the second hole to prevent the second support element from rotating between the extended position and the folded position.

According to an advantageous feature of the present invention, the device comprises actuation means, for example of the pneumatic type, able to command the pin.

According to another variant of the present invention, the first clamping element comprises a plate and the second clamping element comprises a shoulder made in the second support element.

Advantageously, when the second support element is in the extended position and the weight of the means of transport weighs on the support device, the plate is disposed resting on the shoulder so as to prevent the second support element from rotating between the extended position and the folded position.

According to another advantageous feature of the present invention, the device also comprises a cover element, for example a fairing, rotatably pivoted on the first support element.

An elastic means, for example a spring, associated with the first support element and the cover element, is able to influence elastically the cover element so as to rotate the latter from a clamping position to a release position.

Advantageously, the cover element, in the clamping position, is able to prevent the second support element from rotating between the folded position and the extended position.

On the contrary, in the release position, the cover element is able to allow the second support element to rotate between the folded position and the extended position and vice versa.

The use of a first clamping element like the pin or the plate therefore allows to obtain a support device with a simple mechanical embodiment which does not entail high production and maintenance costs.

### BRIEF DESCRIPTION OF THE DRAWINGS

These and other characteristics of the present invention will become apparent from the following description of a preferential form of embodiment, given as a non-restrictive example with reference to the attached drawings wherein:
- fig. 1 is a lateral view of a device according to the present invention in a folded position, applied to a means of transport attached to a tractor;
- fig. 2 is a front view of the means of transport in fig. 1;
- fig. 3 is a lateral view of the device in fig. 1 in an extended position and the relative means of transport;
- fig. 4 is a front view of the means of transport in fig. 3;
- fig. 5 is a front view of a first form of embodiment of the device in fig.1;
- fig. 6a is a sectioned view from VI to VI in fig. 5 of a first operating condition;
- fig.6b is a sectioned view from VI to VI in fig. 5 of a second operating condition;
- fig. 7 is a front view of the device in fig. 3 in the embodiment in fig. 5;
- fig. 8a is a sectioned view from VIII to VIII in fig. 7 of a first operating condition;
- fig. 8b is a sectioned view from VIII to VIII in fig. 7 of a second operating condition;
- fig. 9 is a front view of a second form of embodiment of the device in fig. 1;
- fig. 10a is a sectioned view from X to X in fig. 9 of a first operating condition;
- fig. 10b is a sectioned view from X to X in fig. 9 of a second operating condition;
- fig. 11 is a front view of the device in fig. 3 in the form of embodiment in fig. 9;
- fig. 12a is a sectioned view from XII to XII in fig. 11 of a first operating condition;
- fig. 12b is a sectioned view from XII to XII in fig. 11 of a second operating condition; and
- fig. 13 is another front view of the device in fig. 3 in the form of embodiment in fig. 5.

### DETAILED DESCRIPTION OF A PREFERENTIAL FORM OF EMBODIMENT

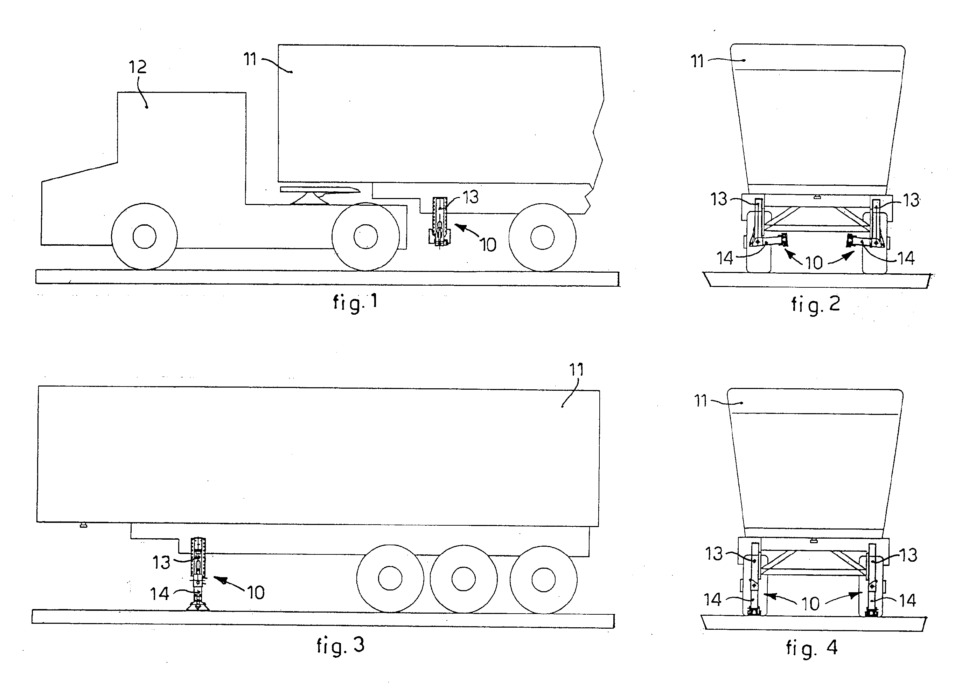

With reference to figs. 1 to 4, a support device 10 is able to be attached to a semitrailer 11, to support the latter statically when it is detached from its drive tractor 12.

The device 10 comprises a first upright 13, able to be attached to the frame of the semitrailer 11, advantageously in a lateral position, and a second upright 14, rotatably pivoted to the first upright 13, and able to rotate from a folded position (figs. 1 and 2), not interfering with the road surface when the semitrailer 11 is in movement, that is, advantageously substantially horizontal, towards the inside of the semitrailer 11, to an extended position (figs. 3 and 4) in which the first upright 13 and the second upright 14 are able to statically support the semitrailer 11 and vice versa.

According to a first form of embodiment of the present invention, the second upright 14 is provided with a first side 15 in which a first hole 16 is made, and a second side 17, perpendicular to the first side 15, in which a second hole 18 is made.

The support device 10 also comprises a pin 19, disposed in the first upright 13 with its longitudinal axis parallel to the longitudinal axis of the first upright 13.

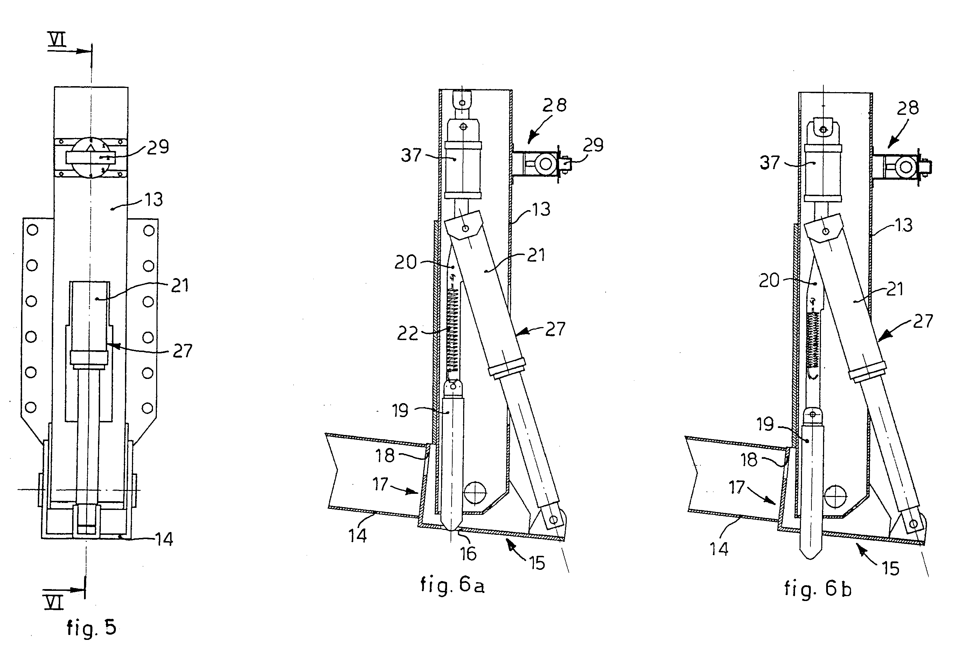

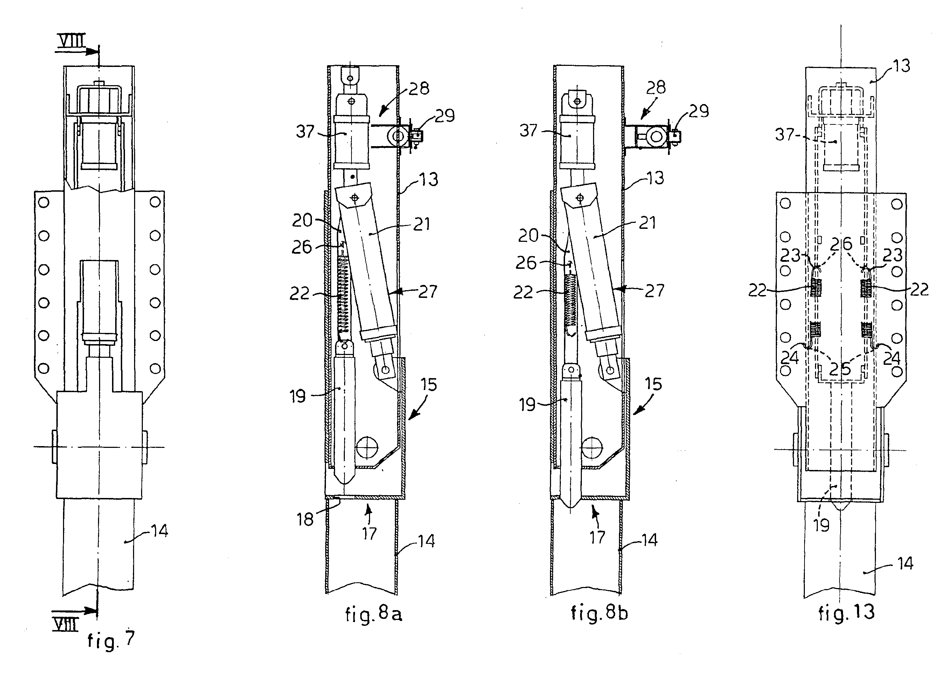

The pin 19 is able to couple, by rectilinear sliding, both with the first hole 16 and also with the second hole 18, in order to clamp the second upright 14 respectively in the folded position (fig. 6b) and the extended position (fig. 8b).

According to the present invention, the device 10 comprises a first bar 20, able to be operatively connected to the pin 19, and a cylinder 21 able to be operatively connected to the second upright 14, to command the rotation of the latter.

According to an advantageous feature of the present invention, the support device 10 comprises elastic means 22 (fig. 13), such as one or more elastic springs, advantageously made of harmonic steel, operatively associated with the first upright 13 and the first bar 20, to achieve the automatic return of the pin 19.

In order to elastically connect the first bar 20 to the first upright 13, the elastic means 22 include first and second hook means 23, 24, able to be attached to the respective first and second attachment hole 25, 26 of the first upright 13 and the first bar 20.

The support device also comprises automatic actuation means 37, 27 to actuate the first bar 20 and the cylinder 21, able to command respectively the rectilinear sliding of the pin 19 and the rotation of the second upright 14.

For example, the automatic actuation means 37, 27 is of the telescopic piston type, drivable fluid-dynamically, advantageously commanded by a command unit 28, for example activated by means of a switch 29 (figs. 5, 6a, 6b).

In a first operating condition, otherwise called open condition (figs. 6a and 8a), the pin 19 does not couple with said two holes 16, 18, allowing the second upright 14 to rotate respectively from the folded condition to the extended condition and vice versa.

In a second operating condition, otherwise called closed condition, the pin 19 couples in the first hole 16 (fig. 6b) to clamp the second upright 14 in the folded position, or in the second hole 18 to clamp the second upright 14 in the extended position (fig. 8b).

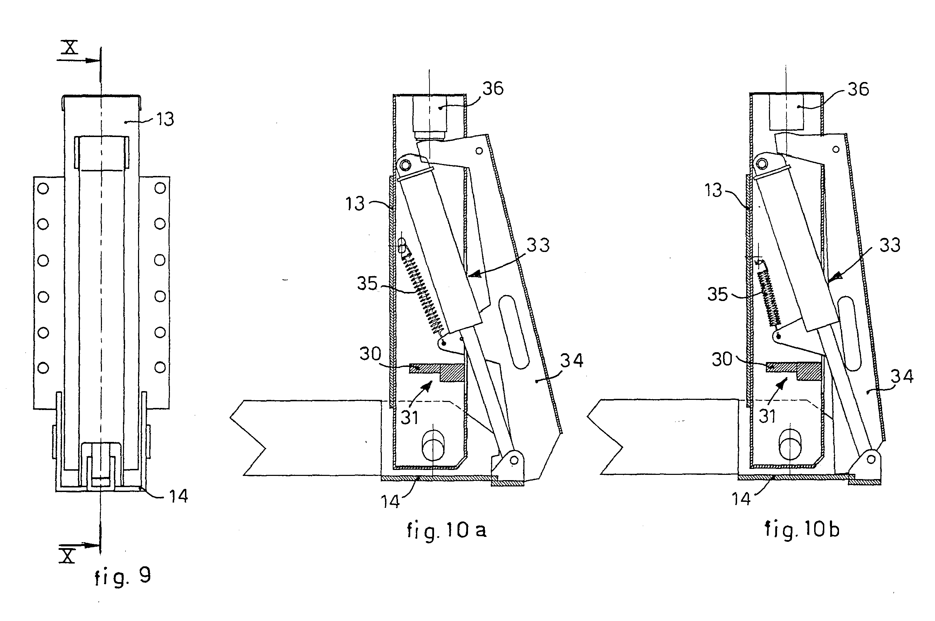

According to a second form of embodiment of the present invention, the support device 10 comprises a clamping plate 30 (fig. 10a), disposed transversely to the longitudinal axis of the first upright 13, and provided with an abutment 31.

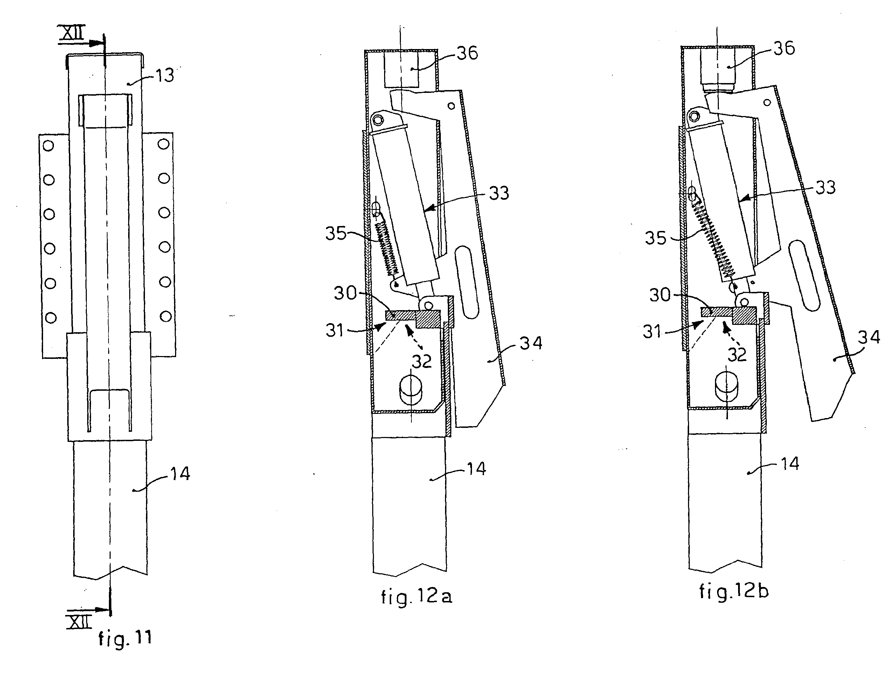

The second upright 14 is provided with a corresponding shoulder 32 (figs. 12a, 12b), parallel to the abutment 31.

The abutment 31 and the shoulder 32 are able to couple, again due to rectilinear sliding, to clamp the second upright 14 in the extended position, when the weight of the semitrailer 11 rests on the support device 10.

In this operating condition (figs. 12a, 12b), in fact, the abutment 31 and the shoulder 32 couple with each other, determining a resistant moment, which prevents the second upright 14 from rotating. The resistant moment increases as the weight of the semitrailer 11 increases, therefore the greater the weight of the semitrailer 11, the more stable the second upright 14 will be.

The support device 10 according to the present form of embodiment comprises actuation means of the pneumatic type 33, able to command the rotation of the second upright 14.

The support device 10 also comprises a fairing 34, commanded by a cylinder 36, of the pneumatic type, able to be attached to the first upright 13 by means of a spring 35,to automatically return the fairing 34 to a clamping position. In this position the fairing 34 is able to prevent the second upright 14, in the folded position, from rotating and moving to the extended position (fig. 10b). Vice versa, in a release position, the fairing 34 is able to allow the second upright 14 to rotate freely, to move either to the folded position (fig. 12b) or to the extended position (fig. 10a).

It is clear that modifications and/or additions of parts may be made to the support device to support a means of transport as described heretofore, without departing from the field and scope of the present invention.

It is also clear that, although the present invention has been described with reference to some specific examples, a person of skill in the art shall certainly be able to achieve many other equivalent forms of support device to support a means of transport, having the characteristics as set forth in the claims and hence all coming within the field of protection defined thereby.

## Claims

1. Support device, to support statically a means of transport (11), comprising: a first support element (13) able to be made solid with said means of transport; a second support element (14), rotatably pivoted on said first support element (13), to be able to rotate between an extended position, in which said first and second support elements (13, 14) are able to support statically said means of transport (11), and a folded position which allows said means of transport (11) to move, and vice versa; a first clamping element (19, 30), disposed in said first support element (13) and able to cooperate with a second clamping element (16, 18, 32) of said second support element (14) in order to selectively clamp said second support element (14) at least in said extended position, **characterized in that** said first clamping element (19, 30) is able to couple due to rectilinear sliding with said second clamping element (16, 18, 32), so as to prevent, when clamping is activated, the rotation of said second support element (14) with respect to said first support element (13).

2. Device as in claim 1, **characterized in that** said first clamping element comprises a pin (19).

3. Device as in claim 2, **characterized in that** said second clamping element comprises a first hole (16).

4. Device as in claim 3, **characterized in that** said pin (19) is able to be inserted in said first hole (16) to prevent said second support element (14) from rotating between said folded position and said extended position.

5. Device as in claim 3, **characterized in that** said second clamping element comprises a second hole (18).

6. Device as in claim 5, **characterized in that** said pin (19) is able to be inserted in said second hole (18) to prevent said second support element (14) from rotating between said extended position and said folded position.

7. Device as in any claim hereinbefore, **characterized in that** it comprises first actuation means (37), able to command said pin (19).

8. Device as in any claim hereinbefore, **characterized in that** it comprises second actuation means (27) able to command said second support element (14).

9. Device as in claim 1, **characterized in that** said first clamping element comprises a plate (30).

10. Device as in claim 8, **characterized in that** said plate comprises an abutment (31).

11. Device as in claim 9, **characterized in that** said second clamping element comprises a shoulder (32) of said second support element (14).

12. Device as in claim 10, **characterized in that** said abutment (31) is able to cooperate with said shoulder (32) to prevent said second support element (14) from rotating between said extended position and said folded position.

13. Device as in claim 11, **characterized in that** it comprises a cover element (34) rotatably pivoted to said first support element (13).

14. Device as in claim 12, **characterized in that** it comprises elastic means (35) associated with said first support element (13) and with said cover element (34), able to influence elastically said cover element (34) so as to rotate said cover element (34) from a clamping position to a release position.

15. Device as in claim 14, **characterized in that** it comprises actuation means (36) able to command said cover element (34), so as to move said cover element (34) to said release position or to said clamping position.

16. Device as in claim 14, **characterized in that** said cover element (34), in said clamping position, is able to prevent said second support element (14) from rotating between said folded position and said extended position.

17. Device as in claim 14, **characterized in that** said cover element (34), in said release position, is able to allow said second support element (14) to rotate between said folded position and said extended position, and vice versa.
